# FASCICULE DE BREVET EUROPEEN

(11) **EP 3 502 540 B1**
(45) Date de publication et mention de la délivrance du brevet: **21.10.2020**
(21) Numéro de dépôt: 18207499.7
(22) Date de dépôt: 21.11.2018
(51) Int. Cl.: F17C 13/04

(54) **ROBINET ET BOUTEILLE DE FLUIDE SOUS PRESSION**
HAHN UND FLASCHE MIT UNTER DRUCK STEHENDER FLÜSSIGKEIT
VALVE AND CYLINDER FOR PRESSURISED FLUID

(30) Priorité: 19.12.2017 FR 1762413
(43) Date de publication de la demande: 26.06.2019
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: FERRE, Aurélien, 75011 Paris (FR); RUDNIANYN, Philippe, 91700 Villiers-sur-Orge (FR); BATUT, Celestin, 75015 Paris (FR)
(74) Mandataire: Pittis, Olivier

(56) Documents cités:
- EP-A1- 3 067 665
- EP-A2- 1 356 228
- WO-A1-2015/110717
- FR-A1- 3 025 585
- US-A1- 2016 245 426

## Description

L'invention concerne un robinet pour bouteille de fluide sous pression ainsi qu'une bouteille correspondante.

L'invention concerne plus particulièrement un robinet pour bouteille de fluide sous pression comprenant un corps muni d'une extrémité destinée à être reliée à l'orifice d'une bouteille de fluide sous pression, le corps du robinet abritant un circuit de soutirage comprenant une première extrémité amont destinée à communiquer le volume de stockage d'une bouteille de fluide sous pression et une seconde extrémité aval destinée à être raccordée à un organe utilisateur du gaz soutiré, le circuit de soutirage comprenant un organe de régulation du débit et/ou de la pression du fluide soutiré entre les extrémités amont et aval, le robinet comprenant un organe de commande manuelle de l'organe de régulation, l'organe de commande étant monté mobile relativement au corps du robinet et coopérant avec l'organe de régulation pour contrôler le débit et/ou la pression de fluide admis à circuler de l'extrémité amont vers l'extrémité aval selon la position de l'organe de commande par rapport au corps du robinet, le robinet comportant un capteur de position de l'organe de commande configuré pour générer un signal électrique représentatif de la position de ce dernier ou du débit et/ou de la pression de fluide imposé par l'organe de régulation, le capteur de position comprenant au moins un élément détectable situé sur le corps du robinet ou, respectivement, sur l'organe de commande, et au moins un élément de mesure situé sur l'organe de commande ou, respectivement, sur le corps du robinet.

L'invention concerne un robinet pourvu d'un dispositif électronique d'indication de données physiques relatives au contenu d'une bouteille de fluide sous pression notamment du gaz sous pression.

On pourra se référer par exemple au document WO2015110717A1 qui décrit un exemple d'un tel dispositif. Ce document décrit un robinet muni d'un détecteur de la position du sélecteur de débit. Ceci permet d'afficher et/ou de calculer plus rapidement la consommation instantanée de gaz, la quantité de gaz restant dans la bouteille et l'autonomie en gaz avant que la bouteille ne soit vide.

Cette solution permet de détecter de façon fiable la position du sélecteur. Cependant, cette structure de détecteur présente des inconvénients parmi lesquels : un encombrement relativement important, un nombre de pièces relativement importantes (engrenage...), une étanchéité difficile à réaliser (vis-à-vis du sable ou de la poussière notamment), un gestion délicate des jeux axiaux et radiaux ...).

Ce document décrit d'autres modes de réalisation du capteur de position utilisant un ou plusieurs éléments mobiles détectables et un ou plusieurs éléments de détection (capteurs) fixes. La précision et la fiabilité de la mesure peut être également altérée du fait que le capteur de position peut être soumis à l'usure, la poussière, les conditions d'humidité...

Un but de la présente invention est de pallier tout ou partie des inconvénients de l'art antérieur relevés ci-dessus.

A cette fin, le robinet selon l'invention, par ailleurs conforme à la définition générique qu'en donne le préambule ci-dessus, est essentiellement caractérisé en ce que l'un au moins parmi : le au moins un élément détectable, le au moins un élément de mesure est recouvert ou enfermé dans une membrane de protection.

Par ailleurs, des modes de réalisation de l'invention peuvent comporter l'une ou plusieurs des caractéristiques suivantes :
- la membrane de protection est souple ou rigide,
- la membrane de protection est étanche,
- la membrane est constituée d'au moins un matériau parmi : du plastique, notamment du polyester, une matière organique, du caoutchouc, une résine,
- la membrane a une épaisseur comprise entre.01mm et 10mm, de préférence entre 0,1 et 2mm,
- la membrane possède au moins un orifice,
- l'un au moins parmi : le ou les éléments détectables, le ou les éléments de mesure sont fixés sur ou intégrés dans un support, le support étant également recouvert ou enfermé dans la membrane de protection,
- le robinet comprend un organe d'acquisition de stockage et de traitement de données et en ce que le capteur de position est relié à ce dernier pour transmettre un signal représentatif de la position l'organe de régulation et/ou du débit et/ou de la pression de fluide imposé par l'organe de régulation,
- le robinet comprend au moins un afficheur de données et/ou un émetteur de données relié à l'organe d'acquisition de stockage et de traitement de données,
- le au moins un élément détectable comprend au moins l'un parmi : un circuit électrique comprenant une piste conductrice électrique, une pluralité de pistes conductrices, un ou plusieurs aimants,
- le au moins un élément de mesure comprend au moins un organe de mesure d'un champ magnétique et/ou d'une résistance électrique, et/ou d'une tension électrique, et/ou d'une pression et/ou d'un déplacement et/ou d'un signal lumineux,
- le capteur de position génère un signal de valeur de tension et/ou de résistance déterminée en fonction de la position de l'organe de commande par rapport au corps du robinet,
- le capteur de position forme un potentiomètre,
- l'organe de commande manuelle de l'organe de régulation est déplaçable dans une position dite « de fermeture » correspondant à une fermeture du premier circuit de soutirage, c'est-à-dire que le débit de fluide admis à passer de l'extrémité amont vers l'extrémité aval est nul,
- l'organe d'acquisition de stockage et de traitement de données est configuré, en réponse à la réception du signal transmis par le capteur de position, pour commander l'affichage sur l'afficheur, respectivement l'envoi via l'émetteur de données, d'une information relative du débit et/ou la pression de fluide imposé par l'organe de régulation et/ou du mode d'utilisation du robinet.

L'invention concerne également une bouteille de fluide sous pression comprenant un robinet selon l'une quelconque des caractéristiques ci-dessus ou ci-après.

L'invention peut concerner également tout dispositif comprenant toute combinaison des caractéristiques ci-dessus ou ci-dessous, dans le cadre des revendications.

D'autres particularités et avantages apparaîtront à la lecture de la description ci-après, faite en référence aux figures dans lesquelles :
- la figure 1 représente une vue de côté, schématique et partielle, illustrant un robinet monté sur une bouteille de gaz sous pression selon un exemple possible de réalisation de l'invention,
- la figure 2 illustre de façon schématique et partielle, la structure et le fonctionnement d'une partie du robinet de la figure 1,
- la figure 3 représente une vue de face, schématique et partielle, illustrant un exemple possible de structure d'une partie du capteur de position intégré au robinet ou un à un organe de commande d'un robinet,
- la figure 4 représente une vue en coupe transversale, schématique et partielle, illustrant un détail du capteur de position coopérant avec l'organe de commande selon un mode possible de réalisation.

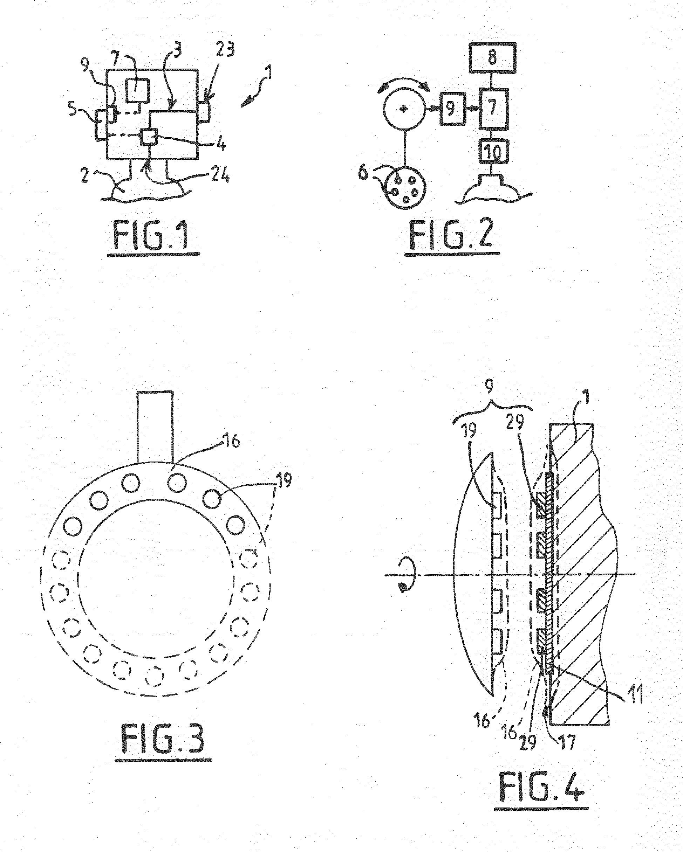

La figure 1 représente schématiquement une bouteille 2 de gaz sous pression munie d'un robinet 1 susceptible de mettre en œuvre l'invention.

Le robinet 1 comprend un corps muni d'une extrémité destinée à être montée dans l'orifice d'une bouteille 2 de fluide sous pression (par exemple par vissage). En variante le robinet 1 peut être raccordé, via un circuit, à un ensemble de bouteille(s).

Classiquement, le corps du robinet 1 abrite un circuit 3 de soutirage comprenant une première extrémité 24 amont communiquant avec le volume de stockage de la bouteille 2. Le circuit 3 de soutirage comprend une seconde extrémité 23 aval destinée à être raccordée à un organe utilisateur du gaz soutiré (par exemple un patient dans le cas d'oxygène ou d'un autre gaz médical).

Le circuit 3 de soutirage comprend un organe 4 de régulation du débit et/ou de la pression du fluide soutiré entre les extrémités amont 24 et aval 23. Cet organe 4 de régulation est par exemple un régulateur de débit à orifices calibrés 6 permettant de sélectionner un débit de gaz soutiré (cf. la représentation schématiquement de la figure 2). Bien entendu, tout autre organe de régulation peut être envisagé, par exemple une vanne à ouverture proportionnelle.

Le robinet 1 comprend un organe 5 de commande manuelle de l'organe 4 de régulation. L'organe 5 de commande est monté mobile relativement au corps du robinet 1 et coopère avec l'organe 4 de régulation pour contrôler le débit et/ou la pression de fluide admis à circuler selon la position de l'organe 5 de commande par rapport au corps du robinet 1.

L'organe 5 de commande comprend par exemple un volant rotatif (cf. figure 4). Bien entendu, tout autre système approprié peut être envisagé (levier pivotant,...). Par exemple, l'organe 5 de commandes sélectionne un orifice calibré 6 et/ou commande une vanne de restriction de débit en fonction de sa position parmi une pluralité de positions discrètes (de préférence stables) ou une pluralité de positions d'un déplacement continu. En particulier, les positions stables peuvent être référencées mécaniquement par un point dur (par exemple via un système d'encliquetage notamment).

Le robinet 1 comprend un dispositif électronique d'indication de donnée(s) relative(s) au contenu de fluide dans une bouteille 2 raccordée au robinet 1. Le dispositif peut être du type comprenant un organe 7 d'acquisition de stockage et de traitement de données et au moins un afficheur 8 de données relié à l'organe 7 d'acquisition de stockage et de traitement de données (cf. figures 1 et 2).

L'organe 7 d'acquisition de stockage et de traitement de données comprend par exemple un calculateur et/ou ordinateur et/ou un microprocesseur ou tout autre système équivalent.

Bien entendu, ce dispositif peut comporter un ou plusieurs organes de réception de données (par connexion filaire et/ou sans fil : antenne(s), port(s)...) ainsi qu'un ou plusieurs organes d'émission de données (par connexion filaire et/ou sans fil : antenne(s), port(s)).

Le robinet 1 comporte un capteur 9 de position de l'organe 5 de commande manuelle de l'organe 4 de régulation. Le capteur 9 de position est relié à l'organe 7 d'acquisition de stockage et de traitement de données pour transmettre à ce dernier un signal représentatif de position de l'organe 5 de commande ou directement un signal correspondant au débit et/ou la pression de fluide imposé par l'organe 4 de régulation.

Le capteur 9 de position de l'organe 5 de commande comprend par exemple un convertisseur du déplacement mécanique de l'organe 5 de commande en un signal électrique exploitable par l'organe 7 d'acquisition de stockage et de traitement de données.

Le capteur 9 de position fournit par exemple un signal électrique ou numérique déterminé en fonction de la position de l'organe 5 de commande. Ce signal peut être fourni par voie filaire et/ou sans fil.

Le capteur de position comprenant au moins un élément 19 détectable situé sur le corps du robinet 1 (fixe) ou, respectivement, sur l'organe 5 de commande (mobile).

Le capteur 9 de position comprend également au moins un élément 29 de mesure de l'élément détectable et situé sur l'organe 5 de commande (mobile) ou, respectivement, sur le corps du robinet 1 (fixe).

Le ou les éléments de mesure 29 peuvent comprendre tout organe de mesure d'un signal électrique (tension, courant, champ magnétique, résistance signal lumineux...) ou de mesure d'un paramètre mécanique. Le ou les élément 19 détectables peuvent comprendre tout organe conjugué (piste conductrice, aimant(s), discontinuité géométrique, couleur...). On pourra se référer par exemple au document WO16162625A1.

Au moins une partie de l'élément 19 détectable et/ou de l'élément 29 de mesure est (sont) recouvert(s) ou enfermé(s) dans une membrane 16 de protection. Dans l'exemple de la figure 4 les éléments 19 détectables (pistes conductrices et/ou aimants ou autre) sont logés dans une membrane 16 de protection et les éléments de mesure 29 sont également disposés dans une membrane de protection respective. En variante seul un des ensembles (19 ou 29) pourrait être logé dans une membrane 16.

La membrane 16 de protection peut être souple ou rigide. De préférence, cette membrane 16 est étanche. La membrane 16 peut être constituée d'au moins un matériau parmi : du plastique, notamment du polyester, de la matière organique, du caoutchouc, de la résine... La membrane 16, qui peut être transparente, peut avoir une épaisseur comprise entre 0,01mm et 10mm de préférence entre 0,1 et 2mm.

En particulier dans le cas d'une membrane 16 étanche, la membrane 16 peut posséder au moins un orifice 17. L'orifice 17 qui peut être situé à une extrémité peut être prévu pour assurer une régulation de la pression au sein de la membrane (en cas de variation de pression et/ou de température. L'orifice peut en particulier être avantageux dans le cas d'un contact et/ou d'une déformation relative entre l'élément 19 détectable et l'élément 29 de mesure.

L'élément 19 détectable et/ou l'élément 29 de mesure peut être fixé sur ou intégré dans un support 11, par exemple une plaque. Le support 11 est de préférence également recouvert ou enfermé dans la membrane 16 de protection ou solidaire de cette membrane 16.

Comme illustré à la figure 3 les éléments 19 détectables peuvent être répartis sur un cercle ou arc de cercle de façon espacée. Ces éléments 19 détectables peuvent coopérer avec un ou plusieurs éléments 29 de mesure.

La position relative des éléments 19 placés sur l'organe 5 de commande rotatif par rapport à le ou les éléments 29 de mesure positionnés sur le robinet permet de déterminer la position de l'organe 5 de commande.

Cette détection peut s'appuyer sur un code binaire. Ainsi, c'est la combinaison de détection des éléments 19 positionnés sur l'organe 5 de commande qui permettra de connaître sa position (par exemple parmi 12 positions/configurations différentes).

Comme indiqué ci-dessus, différentes technologies peuvent être envisagées pour les éléments détectables 19 et de mesure 29 :
- détection par contact (les éléments 19 placés sur l'organe 5 de commande mobile peuvent être des bossages qui feront contact avec des boutons poussoirs 29),
- détection magnétique (les éléments 19 détectables placés sur l'organe 5 de commande peuvent être des aimants qui seront détectés grâce à leur champ magnétique par des capteurs 29 magnétiques),
- détection capacitive via un ou des capteurs capacitifs qui détecte(nt) sans contact un ou des champs électriques.

Les éléments (19 et/ou 29) sont englobés dans une membrane 16 de protection. Cette membrane 16 permet de protéger la solution de détection de préférence de façon étanche à l'environnement extérieur.

L'inclusion de ces éléments 19 et/ou 29 du capteur 9 dans une membrane de position permet d'améliorer la fiabilité et la reproductibilité de la détection de position de l'organe 5 de commande. Ceci permet également d'accroitre la durée de vie du dispositif dans le temps.

En particulier, l'utilisation d'une (ou deux) membrane(s) ne nuit pas à la qualité de détection, au contraire. Même en cas de présence salissures (notamment entre un élément 19 détectable et un élément 29 de mesure), la détection de position n'est pas affectée.

L'invention s'applique également à d'autres formes de capteur 9 de position. Par exemple, l'élément 19 détectable peut être constitué d'une ou plusieurs pistes conductrices continues ayant une résistance électrique déterminée et coopérant avec un élément 29 de détection qui mesure une caractéristique variable (résistance/tension). C'est-à-dire que le déplacement relatif des éléments 19, 29 change la signature électrique (tension et/ou résistance mesurée par un organe de mesure) à la façon d'un potentiomètre.

Par exemple un contact électrique qui délimite la longueur d'une piste conductrice est réalisé à l'intérieur de la membrane 16 via un curseur qui appuie sur la membrane 16. Le curseur est par exemple solidaire de l'organe 5 de commande mobile et la piste est solidaire de la partie fixe du robinet 1.

Le curseur peut déformer élastiquement localement cette première pour former un contact électrique localisé avec le circuit ou la piste conductrice.

Les deux éléments (mobile 19 et fixe 29) du capteur 9 sont donc de préférence séparés ce qui leur permet au repos de ne pas se toucher et donc de ne pas conduire un courant (circuit ouvert). Ceci peut être mis à profit dans au moins une position de l'organe 5 de commande.

Comme illustré schématiquement à la figure 2, le robinet 1 peut comporter en plus un capteur 10 de pression destiné à mesurer la pression au sein du volume de stockage de la bouteille 2. Le capteur 10 de pression peut être relié à l'organe 7 d'acquisition de stockage et de traitement de données pour transmettre à ce dernier un signal représentatif de la pression de fluide mesurée. L'organe 7 d'acquisition de stockage et de traitement de données peut être configuré, en réponse à la réception de ce signal de pression, pour calculer et afficher sur l'afficheur 8 une information d'autonomie ou de contenu de fluide restant dans la bouteille 2 (à partir également de préférence de l'information donnée par le capteur de position 9 de l'organe 5 de commande qui détermine le débit soutiré de la bouteille 2).

Par exemple l'information d'autonomie ou de contenu de fluide restant dans la bouteille 2 peut être exprimée en temps restant (respectivement en quantité restante) en divisant la pression initiale mesurée par le capteur 10 de pression (ou respectivement, une quantité du gaz courante), par la variation de pression théorique imposée par l'organe 4 de régulation (respectivement la variation de quantité imposée par l'organe (4) de régulation), selon une formule par exemple du type: Temps restant= Pression initiale/variation de pression imposée (ou respectivement: Temps restant= Contenu de fluide restant/variation de quantité imposée).

Les variations de quantité ou de pression théoriques peuvent être calculées par exemple via l'équation des gaz parfait PV=nRT ou réels PV= ZnRT (unités S.I.).

Le volume V de la bouteille 2 peut être connu et renseigné dans le l'organe 7 d'acquisition de stockage et de traitement de données et la température peut être mesurée par un capteur extérieur ambiant ou calculée ou renseignée ou approximée.

Le système de capteur 9 de position présente l'avantage d'une détection fiable sans être encombrante. Le capteur et la membrane 16 de protection peuvent être intégrés dans un volume exigu.

Au moins l'un parmi le capteur 9 de position et le capteur 10 de pression, l'afficheur 8, l'organe 7 d'acquisition de stockage et de traitement de données peut être alimenté électriquement par une pile et/ou un système inductif.

De préférence l'organe 5 de commande manuelle de l'organe 4 de régulation peut être déplacé dans une position dite « de fermeture » correspondant une fermeture du circuit 3 de soutirage. C'est-à-dire que le débit de fluide admis à passer de l'extrémité 13 amont vers l'extrémité aval 23 est nul.

De préférence, dans la position de fermeture de l'organe 5 de commande, le capteur 9 de position ne consomme pas d'énergie.

Bien que non représenté par soucis de simplification, le robinet 1 peut comprendre un autre circuit remplissage et/ou de soutirage, par exemple distinct du circuit 3 de soutirage. Ce second circuit de remplissage peut le cas échéant posséder une portion commune avec le circuit 3 de soutirage.

L'invention s'applique avantageusement aux bouteilles de gaz sous pression, notamment aux bouteilles contenant de l'oxygène sous pression.

La solution peut concerner en particulier des sélecteurs de débit rotatifs pouvant se trouver sur le robinet (par exemple avec détendeur) d'une bouteille sous pression. Plus particulièrement, la solution propose un système de détection permettant de connaître le débit sélectionné par l'utilisateur grâce à la position détectée de l'élément rotatif.

## Revendications

1. Robinet pour bouteille de fluide sous pression comprenant un corps muni d'une extrémité destinée à être reliée à l'orifice d'une bouteille de fluide sous pression, le corps du robinet (1) abritant un circuit (3) de soutirage comprenant une première extrémité (24) amont destinée à communiquer le volume de stockage d'une bouteille de fluide sous pression et une seconde extrémité (23) aval destinée à être raccordée à un organe utilisateur du gaz soutiré, le circuit (3) de soutirage comprenant un organe (4) de régulation du débit et/ou de la pression du fluide soutiré entre les extrémités amont (24) et aval (23), le robinet (1) comprenant un organe (5) de commande manuelle de l'organe (4) de régulation, l'organe (5) de commande étant monté mobile relativement au corps du robinet (1) et coopérant avec l'organe (4) de régulation pour contrôler le débit et/ou la pression de fluide admis à circuler de l'extrémité (24) amont vers l'extrémité aval (23) selon la position de l'organe (5) de commande par rapport au corps du robinet (1), le robinet (1) comportant un capteur (9) de position de l'organe (5) de commande configuré pour générer un signal électrique représentatif de la position de ce dernier ou du débit et/ou de la pression de fluide imposé par l'organe (4) de régulation, le capteur de position comprenant au moins un élément (19) détectable situé sur le corps du robinet (1) ou, respectivement, sur l'organe (5) de commande, et au moins un élément (29) de mesure situé sur l'organe (5) de commande ou, respectivement, sur le corps du robinet (1), **caractérisé en ce que** l'un au moins parmi : le au moins un élément (19) détectable, le au moins un élément (29) de mesure est recouvert ou enfermé dans une membrane (16) de protection.

2. Robinet selon la revendication 1, **caractérisé en ce que** la membrane (16) de protection est souple ou rigide.

3. Robinet selon la revendication 1 ou 2, **caractérisé en ce que** la membrane (16) de protection est étanche.

4. Robinet selon l'une quelconque des revendications 1 à 3, **caractérisé en ce que** la membrane (16) est constituée d'au moins un matériau parmi : du plastique, notamment du polyester, une matière organique, du caoutchouc, une résine.

5. Robinet selon l'une quelconque des revendications 1 à 4, **caractérisé en ce que** la membrane (16) a une épaisseur comprise entre.01mm et 10mm, de préférence entre 0,1 et 2mm.

6. Robinet selon l'une quelconque des revendications 1 à 5, **caractérisé en ce que** la membrane (16) possède au moins un orifice (17).

7. Robinet selon l'une quelconque des revendications 1 à 6, **caractérisé en ce que** l'un au moins parmi : le ou les éléments (19) détectable, le ou les éléments (29) de mesure sont fixés sur ou intégrés dans un support (11) et **en ce que** le support et également recouvert ou enfermé dans la membrane (16) de protection.

8. Robinet selon l'une quelconque des revendications 1 à 7, **caractérisé en ce qu'**il comprend un organe (7) d'acquisition de stockage et de traitement de données et **en ce que** le capteur (9) de position est relié à ce dernier pour transmettre un signal représentatif de la position l'organe (5) de régulation et/ou du débit et/ou de la pression de fluide imposé par l'organe (5) de régulation.

9. Robinet selon la revendication 8, **caractérisé en ce qu'**il comprend au moins un afficheur (8) de données et/ou un émetteur de données relié à l'organe (7) d'acquisition de stockage et de traitement de données.

10. Bouteille de fluide sous pression **caractérisée en ce qu'**elle comprend un robinet selon l'une quelconque des revendications 1 à 9.

## Patentansprüche

1. Schließhahn für eine Druckfluidflasche, umfassend einen Körper, der mit einem Ende versehen ist, das dazu bestimmt ist, mit der Öffnung einer Druckfluidflasche verbunden zu werden, wobei der Körper des Schließhahns (1) einen Entnahmekreis (3) aufnimmt, der ein erstes stromaufwärtiges Ende (24), das dazu bestimmt ist, das Speichervolumen einer Druckfluidflasche zu kommunizieren, und ein zweites stromabwärtiges Ende (23) umfasst, das dazu bestimmt ist, an ein Gebrauchsorgan des entnommenen Gases angeschlossen zu werden, wobei der Entnahmekreis (3) ein Organ (4) zur Regelung der Durchflussrate und/oder des Drucks des Fluids umfasst, das zwischen dem stromaufwärtigen (24) und dem stromabwärtigen (23) Ende entnommen wird, wobei der Schließhahn (1) ein Organ (5) zur manuellen Steuerung des Organs (4) zur Regelung umfasst, wobei das Organ (5) zur Steuerung relativ zu dem Körper des Schließhahns (1) beweglich angebracht ist und mit dem Organ (4) zur Regelung zusammenarbeitet, um die Durchflussrate und/oder den Druck des Fluids zu steuern, das eingelassen wird, um von dem stromaufwärtigen Ende (24) zu dem stromabwärtigen Ende (23) gemäß der Position des Organs (5) zur Steuerung relativ zu dem Körper des Schließhahns (1) zu zirkulieren, wobei der Schließhahn (1) einen Positionssensor (9) für das Organ (5) zur Steuerung umfasst, der konfiguriert ist, ein elektrisches Signal zu erzeugen, das für die Position des letzteren oder für die Durchflussrate und/oder für den durch das Organ (4) zur Regelung ausgeübten Druck des Fluids repräsentativ ist, wobei der Positionssensor mindestens ein aufspürbares Element (19), das sich an dem Körper des Schließhahns (1) bzw. an dem Organ (5) zur Steuerung befindet, und mindestens ein Messelement (29) umfasst, das sich an dem Organ (5) zur Steuerung bzw. an dem Körper des Schließhahns (1) befindet, **dadurch gekennzeichnet, dass** mindestens eines gilt: das mindestens eine aufspürbare Element (19), das mindestens eine Messelement (29) ist von einer Schutzmembran (16) bedeckt oder in dieser eingeschlossen.

2. Schließhahn nach Anspruch 1, **dadurch gekennzeichnet, dass** die Schutzmembran (16) flexibel oder starr ist.

3. Schließhahn nach Anspruch 1 oder 2, **dadurch gekennzeichnet, dass** die Schutzmembran (16) dicht ist.

4. Schließhahn nach einem der Ansprüche 1 bis 3, **dadurch gekennzeichnet, dass** die Membran (16) aus mindestens einem Material besteht unter: Kunststoff, insbesondere Polyester, einem organischen Material, Gummi, einem Harz.

5. Schließhahn nach einem der Ansprüche 1 bis 4, **dadurch gekennzeichnet, dass** die Membran (16) eine Dicke zwischen 0,1 mm und 10 mm, vorzugsweise zwischen 0,1 und 2 mm, hat.

6. Schließhahn nach einem der Ansprüche 1 bis 5, **dadurch gekennzeichnet, dass** die Membran (16) mindestens eine Öffnung (17) besitzt.

7. Schließhahn nach einem der Ansprüche 1 bis 6, **dadurch gekennzeichnet, dass** mindestens eines gilt: das (die) aufspürbare(n) Element(e) (19), das (die) Messelement(e) (29) sind an einem Träger (11) befestigt oder in diesem integriert, und dass der Träger auch von der Schutzmembran (16) abgedeckt oder in ihr eingeschlossen ist.

8. Schließhahn nach einem der Ansprüche 1 bis 7, **dadurch gekennzeichnet, dass** er ein Erfassungsorgan (7) zur Speicherung und Verarbeitung von Daten umfasst, und dass der Positionssensor (9) mit diesem letzteren verbunden ist, um ein Signal zu übertragen, das für die Position des Organs (5) zur Regelung und/oder für die Durchflussrate und/oder für den von dem Organ (5) zur Regelung ausgeübten Druck des Fluids repräsentativ ist.

9. Schließhahn nach Anspruch 8, **dadurch gekennzeichnet, dass** er mindestens eine Datenanzeige (8) und/oder einen Datensender umfasst, der mit dem Erfassungsorgan (7) zur Speicherung und zur Verarbeitung von Daten verbunden ist.

10. Druckfluidflasche, **dadurch gekennzeichnet, dass** sie einen Schließhahn nach einem der Ansprüche 1 bis 9 umfasst.

## Claims

1. Valve for cylinder for pressurised fluid comprising a body provided with an end intended to be connected to the orifice of a cylinder for pressurised fluid, the body of the valve (1) housing a drawing-off circuit (3) comprising a first upstream end (24) intended to communicate the storage volume of a cylinder for pressurised fluid and a second downstream end (23) intended to be connected to a user member of the drawn-off gas, the drawing-off circuit (3) comprising a member (4) for regulating the flow rate and/or the pressure of the drawn-off fluid between the upstream (24) and downstream (23) ends, the valve (1) comprising a member (5) for manually controlling the regulation member (4), the control member (5) being mounted mobile relative to the body of the valve (1) and engaging with the regulation member (4) for controlling the flow rate and/or the pressure of fluid input to circulate from the upstream end (24) to the downstream end (23) according to the position of the control member (5) with respect to the body of the valve (1), the valve (1) comprising a position sensor (9) of the control member (5) configured to generate an electric signal representative of the position of the latter or of the flow rate and/or of the pressure of fluid imposed by the regulation member (4), the position sensor comprising at least one detectable element (19) situated on the body of the valve (1) or, respectively, on the control member (5), and at least one measuring element (29) situated on the control member (5) or, respectively, on the body of the valve (1), **characterised in that** the at least one from among: the at least one detectable element (19), the at least one measuring element (29) is covered or confined in a protective membrane (16).

2. Valve according to claim 1, **characterised in that** the protective membrane (16) is flexible or rigid.

3. Valve according to claim 1 or 2, **characterised in that** the protective membrane (16) is sealed.

4. Valve according to any one of claims 1 to 3, **characterised in that** the membrane (16) is formed of at least one material from among: plastic, in particular polyester, an organic material, rubber, a resin.

5. Valve according to any one of claims 1 to 4, **characterised in that** the membrane (16) has a thickness comprised between 0.1mm and 10mm, preferably between 0.1mm and 2mm.

6. Valve according to any one of claims 1 to 5, **characterised in that** the membrane (16) has at least one orifice (17).

7. Valve according to any one of claims 1 to 6, **characterised in that** the at least one from among: the detectable element(s) (19), the measuring element(s) (29) are fixed on or integrated in a support (11) and **in that** the support is also covered or confined in the protective membrane (16).

8. Valve according to any one of claims 1 to 7, **characterised in that** it comprises a storage acquisition and data processing member (7) and **in that** the position sensor (9) is connected to the latter to transmit a signal representative of the position of the regulation member (5) and/or of the flow rate and/or of the pressure of fluid imposed by the regulation member (5).

9. Valve according to claim 8, **characterised in that** it comprises at least one data display unit (8) and/or a data transmitter connected to the storage acquisition and data processing member (7).

10. Cylinder for pressurised fluid, **characterised in that** it comprises a valve according to any one of claims 1 to 9.
